# FASCICULE DE BREVET EUROPEEN

(11) **EP 4 240 897 B1**
(45) Date de publication et mention de la délivrance du brevet: **02.10.2024**
(21) Numéro de dépôt: 21810406.5
(22) Date de dépôt: 22.10.2021
(51) Int. Cl.: D07B 1/06, D07B 1/16

(54) **CÂBLE MULTI-TORONS À DEUX COUCHES AVEC COUCHE INTERNE GAINÉE À PÉNÉTRABILITÉ AMÉLIORÉE**
ZWEISCHICHTIGES MEHRLITZIGES KABEL MIT EINER INTERNEN BESCHICHTUNG MIT VERBESSERTER DURCHLÄSSIGKEIT
MULTI-STRAND CABLE WITH TWO LAYERS WITH A COATED INTERNAL LAYER HAVING IMPROVED PENETRABILITY

(30) Priorité: 05.11.2020 FR 2011344
(43) Date de publication de la demande: 13.09.2023
(73) Titulaire: COMPAGNIE GENERALE DES ETABLISSEMENTS MICHELIN, 63000 Clermont-Ferrand (FR)
(72) Inventeur: GIANETTI, Alexandre, 63040 CLERMONT-FERRAND Cedex 9 (FR)
(74) Mandataire: M.F.P. Michelin
(86) Numéro de dépôt international: PCT/FR2021/051861
(87) Numéro de publication internationale: WO 2022/096799

(56) Documents cités:
- EP-A1- 3 647 487
- WO-A1-2015/189310
- WO-A1-2016/202622
- WO-A1-2019/243691
- US-A1- 2004 045 652
- US-A1- 2010 170 215

## Description

L'invention concerne les câbles multi-torons utilisables notamment pour le renforcement de pneumatiques, particulièrement de pneumatiques pour véhicules industriels lourds.

Un pneumatique à armature de carcasse radiale comprend une bande de roulement, deux bourrelets inextensibles, deux flancs reliant les bourrelets à la bande de roulement et une ceinture, ou armature de sommet, disposée circonférentiellement entre l'armature de carcasse et la bande de roulement. Cette armature de sommet comprend plusieurs nappes de composition élastomérique, éventuellement renforcées par des éléments de renfort tels que des câbles ou des monofilaments, de type métallique ou textile.

L'armature de sommet comprend généralement au moins deux nappes de sommet superposées, dites parfois nappes de travail ou nappes croisées, dont les éléments de renfort, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45°. Les nappes de travail comprennent généralement des éléments de renfort présentant un très faible allongement de façon à assurer leur fonction de guidage du pneumatique.

L'armature de sommet peut également comprendre diverses autres nappes ou couches de composition élastomérique auxiliaires, de largeurs variables selon les cas, comportant ou non des éléments de renfort. On citera à titre d'exemple des nappes dites de protection chargées de protéger le reste de la ceinture des agressions externes, des perforations, ou encore des nappes dites de frettage comportant des éléments de renfort orientés sensiblement selon la direction circonférentielle (nappes dites à zéro degré), qu'elles soient radialement externes ou internes par rapport aux nappes de travail. Les nappes de protection comprennent généralement des éléments de renfort présentant un allongement élevé de façon à se déformer sous l'effet d'une contrainte exercée par un indenteur, par exemple un rocher.

On connaît de l'état de la technique un élément de renfort de nappe de travail comprenant un câble métallique multi-torons à deux couches de structure 189.23. Ce câble comprend une couche interne du câble constituée d'un toron interne et une couche externe du câble constituée de six torons externes enroulés en hélice autour de la couche interne du câble. La demande WO2019243691 divulgue également un câble métallique multi-torons à deux couches de structure 171.26 comprenant une couche interne du câble constituée d'un toron interne et une couche externe du câble constituée de six torons externes enroulés en hélice autour de la couche interne du câble.

Chaque toron interne et externe comprend une couche interne du toron constituée de trois fils internes, une couche intermédiaire constituée de neuf fils et une couche externe du toron constituée de quinze fils externes. Chaque fil présente un diamètre égal à 0,23 mm.

Un pneumatique de véhicule industriel lourd, notamment de génie civil, est soumis à de nombreuses agressions. En effet, le roulage de ce type de pneumatique se fait habituellement sur un revêtement accidenté conduisant parfois à des perforations de la bande de roulement. Ces perforations permettent l'entrée d'agents corrosifs, par exemple l'air et l'eau, qui oxydent les éléments de renfort métalliques de l'armature de sommet, notamment des nappes de sommet, et réduisent considérablement la durée de vie du pneumatique.

Une solution pour augmenter la durée de vie du pneumatique est d'augmenter la force à rupture du câble. Généralement, on augmente la force à rupture en augmentant le diamètre des fils constituant le câble et/ou le nombre de fils et/ou la résistance unitaire de chaque fil. Toutefois, augmenter davantage le diamètre des fils, par exemple au-delà de 0,45 mm tel que c'est le cas dans la demande WO2016051669, entraine nécessairement une baisse de la flexibilité du câble ce qui n'est pas souhaitable. Augmenter le nombre de fils entraine la plupart du temps une baisse de la pénétrabilité des torons par la composition d'élastomère. Enfin, augmenter la résistance unitaire de chaque fil nécessite des investissements importants dans les installations de fabrication des fils.

Une autre solution pour augmenter la durée de vie du pneumatique est de lutter contre la propagation de ces agents corrosifs.

On peut ainsi prévoir de recouvrir chaque fil métallique d'une composition élastomérique lors de la fabrication du câble. Lors de ce procédé, la composition élastomérique présente pénètre dans les capillaires présents entre chaque couche de chaque toron et empêche ainsi la propagation des agents corrosifs. De tels câbles, généralement appelés câbles gommés in situ, sont bien connus de l'état de la technique.

On peut aussi augmenter les distances interfils sur les couches intermédiaires et externes des torons internes et/ou externes afin de favoriser le remplissage des capillaires par la composition elastomérique de la nappe lors de la cuisson du pneumatique. Ceci peut être obtenu en supprimant un ou plusieurs fils sur les couches, ou bien en disposant des fils de diamètre décroissant sur les couches de torons. Réduire le nombre de fils entraîne une baisse de la force à rupture du câble ce qui n'est pas souhaitable.

On peut enfin augmenter les distances intertorons entre les torons externes pour permettre à la composition élastomérique une meilleure accessibilité du toron interne. Ceci peut être réalisé en disposant un toron interne de plus grand diamètre que le diamètre des torons externes. Cette solution entraine une multiplicité de diamètre de fils à gérer lors de la fabrication du câble ou des constructions entre le ou les torons internes et les torons externes différentes ce qui n'est pas souhaitable.

L'invention a pour but un câble présentant une pénétrabilité améliorée de ses torons externes et une meilleure accessibilité du toron interne par la composition d'élastomère par rapport au câble 189.23 pour permettre de réduire l'entrée et la propagation des agents corrosifs dans et le long du câble sans pour autant dégrader la force à rupture du câble.

### CABLE SELON L'INVENTION

A cet effet, l'invention a pour objet un câble multi-torons à deux couches, comprenant :
- une couche interne constituée de Q= 2, 3 ou 4 fils métalliques internes ,
- une couche intermédiaire constituée de M fils métalliques intermédiaires de diamètre d2 enroulés autour de la couche interne , et
- une couche externe constituée de N fils métalliques externes de diamètre d3 enroulés autour de la couche intermédiaire,
- une couche externe du câble constituée de L>1 torons externes enroulés autour de la couche interne du câble présentant un rayon d'hélice R2, chaque toron externe étant à trois couches et comprenant :
   - une couche interne constituée de Q'=2, 3 ou 4 fils métalliques internes ,
   - une couche intermédiaire constituée de M' fils métalliques intermédiaires de diamètre d2' enroulés autour de la couche interne, et
   - une couche externe constituée de N' fils métalliques externes de diamètre d3' enroulés autour de la couche intermédiaire,
dans lequel :
- la couche intermédiaire du ou de chaque toron interne est désaturée de sorte que la somme Sl2 des distances interfils I2 de la couche intermédiaire du ou de chaque toron interne est supérieure ou égale au diamètre d2;
- la couche externe du ou de chaque toron interne est désaturée de sorte que la somme SI3 des distances interfils I3 de la couche externe du ou de chaque toron interne est supérieure ou égale au diamètre d3 ;
- la couche intermédiaire du ou de chaque toron externe est désaturée de sorte que la somme SI2' des distances interfils I2' de la couche intermédiaire de chaque toron externe (TE) est supérieure ou égale au diamètre d2';
- la couche externe de chaque toron externe est désaturée de sorte que la somme SI3' des distances interfils I3' de la couche externe de chaque toron externe est supérieure ou égale au diamètre d3' ;
- le câble est obtenu par un procédé comprenant :
   - une étape de fabrication de la couche interne gainée dans laquelle on entoure la couche interne d'une composition élastomérique présentant une épaisseur G puis d'une couche externe, l'épaisseur G de composition élastomérique étant telle que le rapport R2/Rt va de 1,02 à 1,25 avec Rt étant le rayon d'hélice la couche externe théorique obtenue lorsque la couche interne est directement au contact de la couche externe théorique ; et
   - une étape pour rapprocher la couche externe du câble du cercle dans lequel la couche interne du câble est circonscrite de telle sorte à ce que le rapport R2/Rt va de 1,00 à 1,10

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par définition, le rayon d'hélice R2 de la couche externe du câble est le rayon du cercle théorique passant par les centres des torons externes de la couche externe dans un plan perpendiculaire à l'axe du câble.

Par définition, le diamètre d'un toron est le diamètre du cercle le plus petit dans lequel est circonscrit le toron.

Par définition, une couche de fils désaturée est telle qu'il existe suffisamment d'espace entre les fils métalliques de façon à permettre le passage d'une composition d'élastomère non réticulée. Conformément à l'invention, la couche externe de chaque toron est désaturée ce qui signifie que les fils métalliques de la couche externe ne se touchent pas et qu'il y a suffisamment d'espace entre deux fils métalliques externes adjacents permettant le passage d'une composition d'élastomère, c'est-à-dire tel que la somme des distances interfils soit supérieure ou égale au diamètre du fil. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme des distances interfils par le nombre d'espaces séparant les fils de la couche. En d'autres termes, une couche peut être désaturée lorsque la distance interfils est supérieure ou égale à 5 µm.

De préférence, la distance interfils l2 de la couche intermédiaire du ou de chaque toron interne est supérieure ou égale à 15 µm, plus préférentiellement supérieure ou égale à 35 µm, encore plus préférentiellement supérieure ou égale à 50 µm et très préférentiellement supérieure ou égale à 60 µm.

De préférence, la distance interfils l2' de la couche intermédiaire de chaque toron externe est supérieure ou égale à 15 µm, plus préférentiellement supérieure ou égale à 35 µm, encore plus préférentiellement supérieure ou égale à 50 µm et très préférentiellement supérieure ou égale à 60 µm.

De préférence, la distance interfils l3 de la couche externe du ou de chaque toron interne est supérieure ou égale à 15 µm, plus préférentiellement supérieure ou égale à 35 µm, encore plus préférentiellement supérieure ou égale à 50 µm et très préférentiellement supérieure ou égale à 60 µm.

De préférence, la distance interfils l3' de la couche externe de chaque toron externe est supérieure ou égale à 15 µm, plus préférentiellement supérieure ou égale à 35 µm, encore plus préférentiellement supérieure ou égale à 50 µm et très préférentiellement supérieure ou égale à 60 µm.

De préférence, la distance interfils de la couche externe de chaque toron est inférieure ou égale à 100 µm.

Par opposition, une couche saturée de fils est telle qu'il n'existe pas suffisamment d'espace entre les fils métalliques de façon à permettre le passage d'une composition d'élastomère, c'est-à-dire tel que la somme des distances interfils soit inférieure strictement au diamètre du fil. En d'autres termes, une couche saturée de fils peut être telle que la distance interfils est inférieure à 5 µm.

Dans l'invention, le câble est à deux couches de torons, c'est-à-dire qu'il comprend un assemblage constitué de deux couches de torons, ni plus ni moins, c'est-à-dire que l'assemblage a deux couches de torons, pas une, pas trois, mais uniquement deux.

Par directement au contact de la couche externe théorique, on entend qu'aucune gaine n'est agencée entre la couche interne et la couche externe théorique.

Par composition d'élastomère ou composition élastomérique, on entend que la composition comprend au moins un élastomère ou un caoutchouc (les deux termes étant synonymes) et au moins un autre composant.

La couche interne du câble est entourée d'une composition élastomérique présentant une épaisseur G puis elle entourée d'une couche externe.

Le câble selon l'invention présente une pénétrabilité améliorée par rapport à un câble 189.23 qui n'est pas pénétré du fait de l'absence de composition élastomérique entre la couche interne et la couche externe. Les inventeurs à l'origine de l'invention émettent l'hypothèse que ce rapport initial R2/Rt allant de 1,02 à 1,25 permet d'avoir une épaisseur suffisante de composition élastomérique qui pourra s'infiltrer lors de la cuisson du pneumatique dans le toron interne et de combler les interstices. Ceci est rendu possible grâce à la désaturation des couches intermédiaires et externes du ou des toron(s) interne(s) et des torons externes qui permet à la composition élastomérique de pénétrer d'une part, entre les torons externes et, d'autre part, entre les torons externes et le ou les toron(s) interne(s) permettant ainsi de pousser la composition élastomérique issue de la gaine dans le ou les torons internes jusqu'au capillaire central. Ainsi à l'aide d'une étape finale permettant de rapprocher les torons externes de la couche interne, on peut ainsi réduire le diamètre du câble tout en le rendant très bien pénétré.

Avantageusement, le ou chaque toron interne est à couches cylindriques.

Avantageusement, chaque toron externe est à couches cylindriques.

De façon très avantageuse, le ou chaque toron interne et chaque toron externe sont à couches cylindriques. On rappelle que de telles couches cylindriques sont obtenues lorsque les différentes couches d'un toron sont enroulées à des pas différents et/ou lorsque les sens d'enroulement de ces couches sont distincts d'une couche à l'autre. Un toron à couches cylindriques est très fortement pénétrable contrairement à un toron à couches compactes dans lequel les pas de toutes les couches sont égaux et les sens d'enroulement de toutes les couches sont identiques, qui présente une pénétrabilité bien plus faible.

On rappelle que, de manière connue, le pas d'un toron représente la longueur de ce toron, mesurée parallèlement à l'axe du câble, au bout de laquelle le toron ayant ce pas effectue un tour complet autour dudit axe du câble. De façon analogue, le pas d'un fil représente la longueur de ce fil, mesurée parallèlement à l'axe du toron dans lequel il se trouve, au bout de laquelle le fil ayant ce pas effectue un tour complet autour dudit axe du toron.

Par sens d'enroulement d'une couche de torons ou de fils, on entend le sens formé par les torons ou les fils par rapport à l'axe du câble ou du toron. Le sens d'enroulement est communément désigné par la lettre soit Z, soit S.

Les pas, sens d'enroulement et diamètres des fils et des torons sont déterminés conformément à la norme ASTM D2969-04 de 2014.

De préférence, les torons ne subissent pas de préformation.

Avantageusement, le câble est métallique. Par câble métallique, on entend par définition un câble formé de fils constitués majoritairement (c'est-à-dire pour plus de 50% de ces fils) ou intégralement (pour 100% des fils) d'un matériau métallique. Un tel câble métallique est préférentiellement mis en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est avantageusement utilisé, sa teneur en carbone (% en poids d'acier) est de préférence comprise entre 0,05% et 1,2%, notamment entre 0,4% et 1,1% ; ces teneurs représentent un bon compromis entre les propriétés mécaniques requises pour le pneumatique et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

De préférence, les fils d'une même couche d'un toron prédéterminé (interne ou externe) présentent tous sensiblement le même diamètre. Avantageusement, les torons externes présentent tous sensiblement le même diamètre. Par « sensiblement le même diamètre», on entend que les fils ou les torons ont le même diamètre aux tolérances industrielles près.

Avantageusement, les torons externes sont enroulés en hélice autour du toron interne selon un pas allant de 40 mm à 100 mm et de préférence allant de 50 mm à 90 mm.

Dans un premier mode de réalisation selon l'invention, la couche externe du câble est saturée de sorte que la distance inter-torons E des torons externes définie, sur une section du câble perpendiculaire à l'axe principal du câble, comme la distance la plus courte qui sépare, en moyenne, les enveloppes circulaires dans lesquelles sont inscrits deux torons externes adjacents soit inférieure strictement à 20 µm.

Par définition, une couche de câble saturée est telle que la distance inter-torons des torons externes est inférieure strictement à 20 µm. La distance inter-torons de la couche externe de torons externes est définie, sur une section du câble perpendiculaire à l'axe principal du câble, comme la distance la plus courte qui sépare, en moyenne, les enveloppes circulaires dans lesquelles sont inscrits deux torons externes adjacents. Ainsi, cette construction du câble permet d'assurer une bonne stabilité architecturale de la couche externe et la saturation de la couche externe permet de s'assurer que la couche externe comprend un nombre relativement élevé de torons externes et donc présente une force à rupture relativement élevée.

Par opposition, une couche de câble désaturée est telle que la distance inter-torons E des torons externes est supérieure ou égale à 20 µm.

Dans un deuxième mode de réalisation selon l'invention, L est inférieur ou égal au nombre maximum de torons externes Lmax pouvant être disposés sur la couche externe théorique présentant un rayon d'hélice Rt et L est tel que la couche externe soit incomplètement insaturée.

Par définition, une couche incomplètement insaturée est telle qu'il n'existe pas suffisamment de place dans cette couche pour y ajouter au moins un (P+1)^{ième} toron du même diamètre que les P torons de la couche. En l'espèce, il n'existe pas suffisamment de place dans la couche externe pour y ajouter au moins un (L+1)^{ième} toron externe du même diamètre que les L torons externes de la couche externe. Ainsi, cette construction du câble permet d'assurer une bonne stabilité architecturale de la couche externe et l'insaturation incomplète de la couche externe permet de s'assurer que la couche externe comprend un nombre relativement élevé de torons externes et donc présente une force à rupture relativement élevée.

Une couche complètement insaturée est, par opposition à une couche incomplètement insaturée, telle qu'il existe suffisamment de place dans cette couche pour y ajouter au moins un (P+1)^{ième} toron du même diamètre que les P toron de la couche, plusieurs torons pouvant alors être ou non au contact les uns des autres. En l'espèce, il existe suffisamment de place dans la couche externe pour y ajouter au moins un (L+1)^{ième} toron du même diamètre que les L torons externes de la couche externe.

De préférence, L est égal au nombre maximum de torons externes Lmax pouvant être disposés sur la couche externe théorique présentant un rayon d'hélice Rt et L est tel que la couche externe soit incomplètement insaturée. La couche externe comprend un nombre élevé de torons externes et donc présente une force à rupture relativement élevée.

Avantageusement, l'épaisseur G de la gaine de composition élastomérique est strictement supérieure à 0 mm et de préférence supérieure ou égale à 0,01 mm. Plus l'épaisseur G de la composition élastomérique est importante, meilleure est la pénétrabilité dans la couche interne.

Avantageusement, l'épaisseur G de la gaine de composition élastomérique est inférieure ou égale à 0,80 mm, de préférence inférieure ou égale à 0,60 mm et plus préférentiellement inférieure ou égale à 0,52 mm. Cette épaisseur permet d'optimiser la pénétrabilité de la couche interne tout en limitant le diamètre externe du câble.

Avantageusement, la composition élastomérique comprend un élastomère choisi dans le groupe constitué par les polybutadiènes, le caoutchouc naturel, les polyisoprènes de synthèse, les copolymères de butadiène, les copolymères d'isoprène, et les mélanges de ces élastomères.

De préférence, la composition élastomérique comprend un élastomère choisi dans le groupe constitué par le caoutchouc naturel, les polyisoprènes de synthèse, les copolymères d'isoprène, et les mélanges de ces élastomères.

De préférence, la composition d'élastomère comprend également un système de vulcanisation, une charge. Plus préférentiellement, l'élastomère est diénique.

De préférence, la composition élastomérique comprend du noir de carbone à titre de charge renforçante.

Avantageusement, K=1, 2, 3 ou 4, de préférence K=1, 2 ou 3 et plus préférentiellement K=1 ou 3.

Avantageusement, L=6, 7, 8, 9 ou 10 de préférence L=6, 7, 8 ou 9 et plus préférentiellement L=6 ou 9.

Dans une première variante, K=1 et L=6. Dans le câble dans lequel K=1, la présence de la composition élastomérique va permettre une bonne pénétrabilité et en plus, du fait des efforts transversaux sévères exercés par les torons externes sur le toron interne, de soulager les pressions de contact vers le toron interne.

Dans une deuxième variante, K=2 et L=7 ou 8, et de préférence K=2 et L=8.

Dans une troisième variante, K=3 et L=7, 8 ou 9, de préférence K=3, L=9.

Dans une quatrième variante, K=4 et L=9 ou 10, de préférence K=4, L= 10.

Dans des modes de réalisation non conforme à l'invention, notamment ceux où K=3 ou 4, il existe un risque de voir une très forte propagation des agents corrosifs entre les K=3 ou 4 torons internes qui délimitent un capillaire central très favorable à leur propagation le long du câble, lorsque le câble est insuffisamment pénétré. Cet inconvénient peut être surmonté grâce à la gaine autour des K torons internes le rendant pénétrable par la composition d'élastomère qui empêche alors les agents corrosifs d'accéder au capillaire central, qui est lui-même pénétré, et empêche la propagation de ces agents corrosifs le long du câble.

Dans les câbles dans lesquels K>1, les efforts transversaux les plus sévères qui s'exercent dans le câble lorsque celui-ci est mis en tension sont les efforts transversaux s'exerçant entre les torons internes. Dans l'état de la technique, on connait des câbles présentant une architecture dans laquelle K>1 et comprenant un nombre de torons externes tels que la couche externe du câble soit saturée de façon à maximiser la force à rupture en ajoutant un nombre maximal de torons externes. Ici, grâce à la désaturation des couches externes des torons, le câble présente, d'une part, des espaces entre les fils externes permettant le passage de la composition d'élastomère et donc de rendre le câble moins sensible à la corrosion. D'autre part, bien que l'on réduise le nombre de fils externes, la désaturation de la couche externe des torons permet à la composition d'élastomère de pénétrer d'une part, entre les fils externes et, d'autre part, de pousser la composition élastomérique de la gaine entre les torons internes de façon à former un coussin de composition d'élastomère absorbant au moins partiellement les efforts transversaux s'exerçant entre les torons internes. Ainsi, par rapport à un câble analogue présentant une couche externe du câble saturée, on obtient une meilleure résistance à la corrosion.

### Toron interne du câble selon l'invention

Dans un mode de réalisation préféré, Q>1, de préférence Q=2, 3 ou 4. Dans le cas où Q serait égal à 1, il existerait un risque de voir, sous l'effet des efforts répétés de compression appliqués au câble, le fil interne du toron interne sortir radialement du toron interne et même du câble. Grâce à la présence de plusieurs fils dans la couche interne du toron interne (Q>1), on réduit ce risque, les efforts de compression étant alors répartis sur la pluralité de fils de la couche interne.

Avantageusement, M=7, 8, 9 ou 10 et de préférence M=7, 8 ou 9.

Avantageusement, N=12, 13, 14,15 ou 16 et de préférence N= 12, 13, ou 14.

De préférence, Q=4, M=9 et N=14.

### Torons externes du câble selon l'invention

Avantageusement, M'=7, 8, 9 ou 10 et de préférence M'=7, 8 ou 9.

Avantageusement, N'=12, 13, 14,15 ou 16 et de préférence N'= 12, 13 ou 14.

De préférence, Q'=3, M'=9 et N'=14.

Avantageusement,
- Q=4, M=9 et N=14,
- chaque fil métallique interne de chaque toron interne présente un diamètre d1 égal au diamètre d2 de chaque fil intermédiaire de chaque toron interne et égal au diamètre d3 de chaque fil externe de chaque toron interne ,
- Q'=3, M'=9 et N'=14,
- chaque fil métallique intermédiaire de chaque toron externe présente un diamètre d2' égal au diamètre d3' de chaque fil externe de chaque toron externe, et
- d1=d2=d3=d1'.

Avantageusement, chaque fil métallique présente respectivement un diamètre d1, d1', d2, d2', d3, d3' allant de 0,10 mm à 0,60 mm, de préférence de 0,12 mm à 0,50 mm et plus préférentiellement de 0,15 mm à 0,42 mm.

### PROCEDE DE FABRICATION DU CABLE SELON L'INVENTION

Un autre objet de l'invention est un procédé de fabrication d'un câble multi-torons à deux couches, dans lequel:
- dans une étape, on assemble en hélice K≥1 torons internes par câblage ou retordage pour former une couche interne du câble ; le ou chaque toron interne étant à trois couches et comprenant : une couche interne constituée de Q= 2, 3 ou 4 fils métalliques internes , une couche intermédiaire constituée de M fils métalliques intermédiaires de diamètre d2 enroulés autour de la couche interne de sorte que la somme Sl2 des distances interfils l2 de la couche intermédiaire du ou de chaque toron interne est supérieure ou égale au diamètre d2 et une couche externe constituée de N fils métalliques externes de diamètre d3 enroulés autour de la couche intermédiaire de sorte que la somme Sl3 des distances interfils l3 de la couche externe du ou de chaque toron interne est supérieure ou égale au diamètre d3
- dans une étape, on entoure la couche interne d'une composition élastomérique présentant une épaisseur G pour former une couche interne gainée, l'épaisseur G de composition élastomérique étant telle que le rapport R2/Rt va de 1,02 à 1,25 avec Rt étant le rayon d'hélice la couche externe théorique obtenue lorsque la couche interne est directement au contact de la couche externe théorique ;
- dans une étape, on assemble en hélice L>1 torons externes autour de la couche interne du câble par câblage ou retordage, chaque toron externe étant à deux couches et comprenant : une couche interne constituée de Q'=2, 3 ou 4 fils métalliques internes, une couche intermédiaire constituée de M' fils métalliques intermédiaires de diamètre d2' enroulés autour de la couche interne de sorte que la somme Sl2' des distances interfils l2' de la couche intermédiaire de chaque toron externe est supérieure ou égale au diamètre d2' et une couche externe constituée de N' fils métalliques externes de diamètre d3' enroulés autour de la couche intermédiaire de sorte que la somme Sl3' des distances interfils l3' de la couche externe de chaque toron externe est supérieure ou égale au diamètre d3';
- dans une étape, on utilise des moyens pour rapprocher la couche externe du câble du cercle dans lequel la couche interne du câble est circonscrite de telle sorte à ce que le rapport R2/Rt va de 1,00 à 1,10.

Avantageusement, les étapes d'assemblage en hélice des K≥1 torons internes et des L>1 torons externes autour de la couche interne du câble se font par câblage.

Avantageusement, les moyens utilisés pour rapprocher la couche externe du câble du cercle dans lequel la couche interne du câble est circonscrite sont, par exemple, constitués de deux rangées de galets montées en vis-à-vis mais décalées et entre lesquelles on fait passer le câble.

Dans un mode de réalisation, une des rangées est mobile et peut être rapprochée de la rangée fixe pour que le câble subisse une succession de flexion.

Dans un autre mode de réalisation, les rangées de galets sont mobiles autour de l'axe du câble.

### PRODUIT RENFORCE SELON L'INVENTION

Un autre objet de l'invention est un produit renforcé comprenant une matrice élastomérique et au moins un câble tel que défini ci-dessus.

Avantageusement, le produit renforcé comprend un ou plusieurs câbles selon l'invention noyés dans la matrice élastomérique, et dans le cas de plusieurs câbles, les câbles sont agencés côte à côte selon une direction principale.

### PNEUMATIQUE SELON L'INVENTION

Un autre objet de l'invention est un pneumatique comprenant au moins un câble ou un produit renforcé tel que défini ci-dessus.

De préférence, le pneumatique comporte une armature de carcasse ancrée dans deux bourrelets et surmontée radialement par une armature de sommet elle-même surmontée d'une bande de roulement, l'armature de sommet étant réunie auxdits bourrelets par deux flancs et comportant au moins un câble tel que défini ci-dessus.

Dans un mode de réalisation préféré, l'armature de sommet comprend une armature de protection et une armature de travail, l'armature de travail comprenant au moins un câble tel que défini ci-dessus, l'armature de protection étant radialement intercalée entre la bande de roulement et l'armature de travail.

Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.

De manière préférentielle, le pneumatique est pour véhicule de type génie civil. Ainsi, le pneumatique présente une dimension dans laquelle le diamètre, en pouces, du siège de la jante sur laquelle le pneumatique est destiné à être monté est supérieur ou égal à 25 pouces, de préférence du 39 au 63 pouces.

L'invention concerne également un article de caoutchouc comprenant un assemblage selon l'invention, ou un assemblage imprégné selon l'invention. Par article de caoutchouc, on entend tout type d'article de caoutchouc tel qu'un ballon, un objet non pneumatique tel qu'un bandage non pneumatique, une bande transporteuse ou une chenille.

L'invention sera mieux comprise à la lecture des exemples qui vont suivre, donnés uniquement à titre d'exemples non limitatifs et faites en se référant aux dessins dans lesquels :
- la figure 1 est une vue en coupe perpendiculaire à la direction circonférentielle d'un pneumatique selon l'invention ;
- la figure 2 est une vue de détails de la zone II de la figure 1 ;
- la figure 3 est une vue en coupe d'un produit renforcé selon l'invention ;
- la figure 4 est une vue schématique en coupe perpendiculaire à l'axe du câble (supposé rectiligne et au repos) d'un câble (50) selon l'invention ;
- la figure 5 et la figure 6 sont des représentations schématiques d'une installation de fabrication d'un câble (50) selon l'invention ;
- la figure 7 est une représentation schématique de l'étape 400 de rapprochement de la couche externe vers la couche interne d'un câble (50) selon l'invention ;
- la figure 8 est une photographie d'un câble EDT et des câbles comparatifs C1 et C2 ; et
- la figure 9 est une photographie des câbles 50, 51 et 70 selon l'invention.

### EXEMPLE DE PNEUMATIQUE SELON L'INVENTION

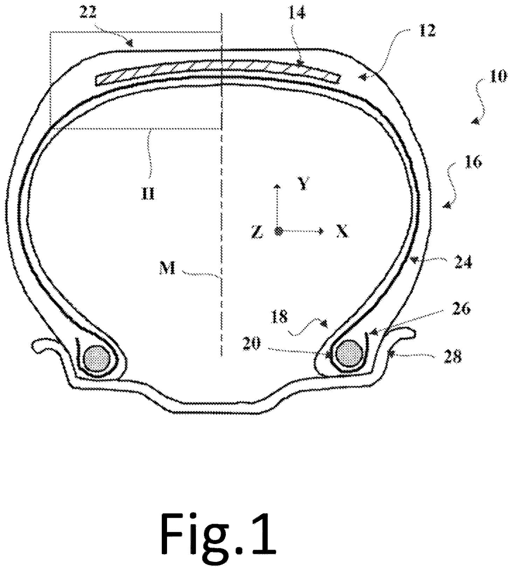

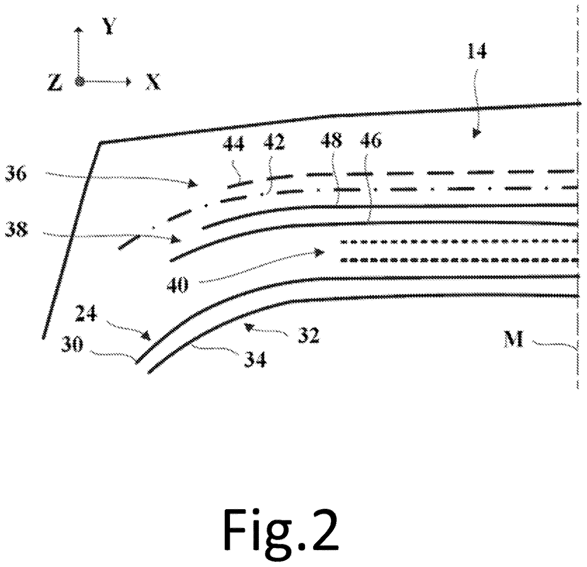

Dans les figures 1 et 2, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet.

On a représenté sur les figures 1 et 2 un pneumatique selon l'invention et désigné par la référence générale 10.

Le pneumatique 10 est pour véhicule lourd de type génie civil, par exemple de type « dumper ». Ainsi, le pneumatique 10 présente une dimension de type 53/80R63.

Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 renforcée par des câbles de carcasse radiaux (non représentés). Les câbles de carcasse sont agencés sensiblement parallèlement les uns aux autres et s'étendent d'un bourrelet 18 à l'autre de manière à former un angle compris entre 80° et 90° avec le plan circonférentiel médian M (plan perpendiculaire à l'axe de rotation du pneumatique qui est situé à mi-distance des deux bourrelets 18 et passe par le milieu de l'armature de sommet 14).

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 40 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 40.

L'armature de protection 36 comprend des première et deuxième nappes de protection 42, 44 comprenant des câbles métalliques de protection, la première nappe 42 étant agencée radialement à l'intérieur de la deuxième nappe 44. De façon optionnelle, les câbles métalliques de protection font un angle au moins égal à 10°, de préférence allant de 10° à 35° et préférentiellement de 15° à 30° avec la direction circonférentielle Z du pneumatique.

L'armature de travail 38 comprend des première et deuxième nappes de travail 46, 48, la première nappe 46 étant agencée radialement à l'intérieur de la deuxième nappe 48. Chaque nappe 46, 48 comprend au moins un câble 50. De façon optionnelle, les câbles métalliques 50 de travail sont croisés d'une nappe de travail à l'autre et font un angle au plus égal à 60°, de préférence allant de 15° à 40° avec la direction circonférentielle Z du pneumatique.

L'armature additionnelle 40, également appelée bloc limiteur, dont la fonction est de reprendre en partie les sollicitations mécaniques de gonflage, comprend, par exemple et de façon connue en soi, des éléments de renfort métalliques additionnels, par exemple tels que décrits dans FR 2 419 181 ou FR 2 419 182 faisant un angle au plus égal à 10°, de préférence allant de 5° à 10° avec la direction circonférentielle Z du pneumatique 10.

### EXEMPLE DE PRODUIT RENFORCE SELON L'INVENTION

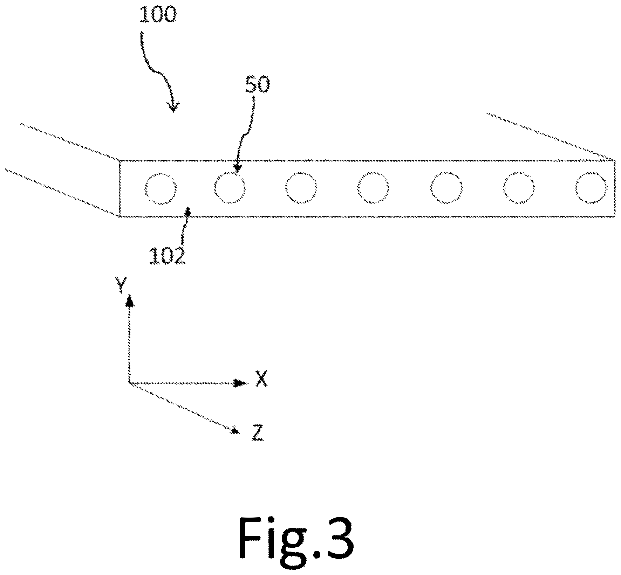

On a représenté sur la figure 3 un produit renforcé selon l'invention et désigné par la référence générale 100. Le produit renforcé 100 comprend au moins un câble 50, en l'espèce plusieurs câbles 50, noyés dans la matrice élastomérique 102.

Sur la figure 3, on a représenté la matrice élastomérique 102, les câbles 50 dans un repère X, Y, Z dans lequel la direction Y est la direction radiale et les directions X et Z sont les directions axiale et circonférentielle. Sur la figure 3, le produit renforcé 100 comprend plusieurs câbles 50 agencés côte à côte selon la direction principale X et s'étendant parallèlement les uns aux autres au sein du produit renforcé 100 et noyés collectivement dans la matrice élastomérique 102.

### CABLE SELON L'INVENTION

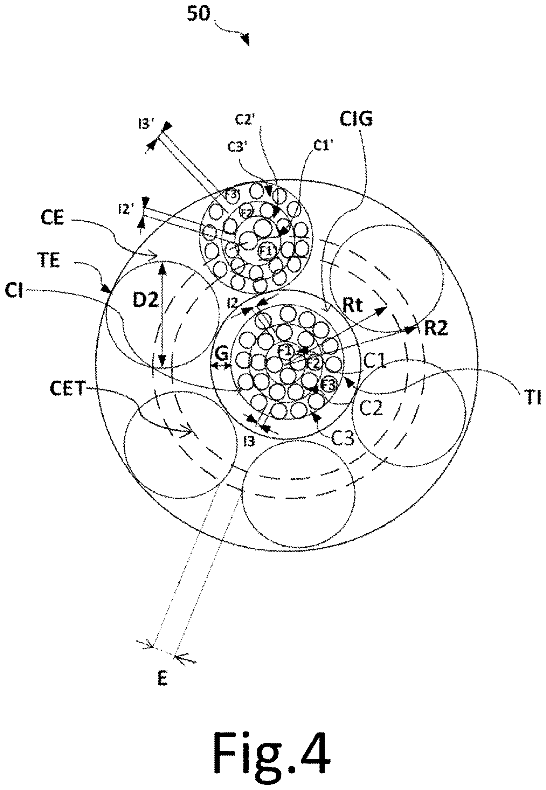

On a représenté sur la figure 4 le câble 50 selon l'invention. Le câble 50 est représenté avant l'étape 400 de rapprochement de la couche externe CE du câble du cercle dans lequel la couche interne CI du câble est circonscrite.

Le câble 50 est métallique et est du type multi-torons à deux couches cylindriques. Ainsi, on comprend que les couches de torons constituant le câble 50 sont au nombre de deux, ni plus, ni moins.

Le câble 50 comprend une couche interne CI du câble constituée de K≥1 toron(s) interne(s) TI. En l'espèce, K=1, 2, 3 ou 4, de préférence K=1, 2 ou 3 et plus préférentiellement K=1 ou 3, ici K=1. La couche interne CI est entourée d'une composition élastomérique présentant une épaisseur G formant alors la couche interne gainée CIG. La couche externe CE est constituée de L>1 torons externes TE enroulés autour de la couche interne gainée CIG du câble présentant un rayon d'hélice R2. En l'espèce, L=6, 7, 8, 9 ou 10, de préférence L=6, 7, 8 ou 9 et plus préférentiellement L=6 ou 9 et en l'espèce L=6. R2 est ici égal à 1,69 mm.

L'épaisseur G de composition élastomérique est telle que le rapport R2/Rt va de 1,02 à 1,25 avec Rt étant le rayon d'hélice la couche externe théorique CET obtenue lorsque la couche interne CI est directement au contact de la couche externe théorique CET. Ici, R2= 1,69 mm et R2/Rt = 1,06.

Le câble 50 est enfin obtenu par un procédé comprenant une étape 500 pour rapprocher la couche externe CE du câble du cercle dans lequel la couche interne CI du câble est circonscrite de telle sorte à ce que le rapport R2/Rt va de 1,00 à 1,10. Ici R2=1,67mm et R2/Rt =1,05.

Le câble 50 comprend également une frette F non représentée constituée d'un unique fil de frette.

### Toron interne TI du câble 50

Le toron interne est à trois couches et comprend une couche interne C1 constituée de de Q= 2, 3 ou 4 fils métalliques internes, une couche intermédiaire C2 constituée de M fils métalliques intermédiaires enroulés autour de la couche interne C1, et une couche externe C3 constituée de N fils métalliques externes enroulés autour de la couche intermédiaire C2.

Ici Q=4.

M=7, 8, 9 ou 10 et de préférence M=7, 8 ou 9. Ici M=9.

N=12, 13, 14,15 ou 16 et de préférence N= 12, 13, ou 14. Ici N=14.

La couche intermédiaire C2 de chaque toron interne TI est désaturée et est incomplètement insaturée. Etant désaturée, La distance interfils de la couche externe de chaque toron interne est supérieure ou égale à 15 µm, plus préférentiellement supérieure ou égale à 35 µm et ici égale à 43 µm. La somme Sl2 des distances interfils l2 de la couche intermédiaire de chaque toron interne est supérieure ou égale au diamètre d2 des fils intermédiaires de la couche intermédiaire de chaque toron interne Ici, la somme Sl2=0,39 mm, valeur supérieure à d2=0,26 mm.

La couche externe C3 de chaque toron interne TI est désaturée et est incomplètement insaturée. Etant désaturée, La distance interfils de la couche externe de chaque toron interne est supérieure ou égale à 15 µm, plus préférentiellement supérieure ou égale à 35 µm, encore plus préférentiellement supérieure ou égale à 50 µm et ici égale à 53 µm. La somme Sl3 des distances interfils l3 de la couche externe de chaque toron interne est supérieure ou égale au diamètre d3 des fils externes de la couche externe de chaque toron interne Ici, la somme Sl3= 0,74mm, valeur supérieure à d3=0,26 mm.

Chaque fil interne, intermédiaire et externe de chaque toron interne TI présente respectivement un diamètre d1, d2 et d3. Chaque diamètre des fils internes d1, intermédiaires d2 et externes d3 de chaque toron interne TI va de 0,10 mm à 0,60 mm, de préférence de 0,12 mm à 0,50 mm et plus préférentiellement de 0,14 mm à 0,42 mm. Ici d1=d2=d3=0,26mm.

### Torons externes TE du câble 50

Chaque toron externe TE est à trois couches et comprend une couche interne C1' constituée de de Q'= 2, 3 ou 4 fils métalliques internes, une couche intermédiaire C2' constituée de M' fils métalliques intermédiaires enroulés autour de la couche interne C1', et une couche externe C3' constituée de N' fils métalliques externes enroulés autour de la couche intermédiaire C2'.

Ici Q'=3.

M'=7, 8, 9 ou 10 et de préférence M'=7, 8 ou 9. Ici M'=9.

N'=12, 13, 14,15 ou 16 et de préférence N'= 12, 13, ou 14. Ici N'=14.

La couche intermédiaire C2' de chaque toron externe TE est désaturée et est incomplètement insaturée. Etant désaturée, La distance interfils de la couche externe de chaque toron externe est supérieure ou égale à 15 µm, plus préférentiellement supérieure ou égale à 35 µm et ici égale à 43 µm. La somme Sl2' des distances interfils l2' de la couche intermédiaire de chaque toron externe est supérieure ou égale au diamètre d2' des fils intermédiaires de la couche intermédiaire de chaque toron externe Ici, la somme Sl2'= 0,39 mm, valeur supérieure à d2'=0,23 mm.

La couche externe C3 de chaque toron externe TE est désaturée et est incomplètement insaturée. Etant désaturée, La distance interfils de la couche externe de chaque toron externe est supérieure ou égale à 15 µm, plus préférentiellement supérieure ou égale à 35 µm, encore plus préférentiellement supérieure ou égale à 50 µm et ici égale à 50 µm. La somme Sl3' des distances interfils l3' de la couche externe de chaque toron externe est supérieure ou égale au diamètre d3' des fils externes de la couche externe de chaque toron externe Ici, la somme Sl3'= 0,70 mm, valeur supérieure à d3'=0,23 mm.

Chaque fil interne, intermédiaire et externe de chaque toron externe TE présente respectivement un diamètre d1', d2' et d3'. Chaque diamètre des fils internes d1', intermédiaires d2' et externes d3' de chaque toron externe TE va de 0,10 mm à 0,60 mm, de préférence de 0,12 mm à 0,50 mm et plus préférentiellement de 0,14 mm à 0,42 mm. Ici d1'=0,26mm et d2'=d3'=0,23mm.

Le câble 50 est tel que : - Q=4, M=9 et N=14,
- chaque fil métallique interne de chaque toron interne présente un diamètre d1 égal au diamètre d2 de chaque fil intermédiaire de chaque toron interne et égal au diamètre d3 de chaque fil externe de chaque toron interne ,
- Q'=3, M'=9 et N'=14,
- chaque fil métallique intermédiaire de chaque toron externe présente un diamètre d2' égal au diamètre d3' de chaque fil externe de chaque toron externe, et
- d1=d2=d3=d1'.

La couche externe CE du câble est désaturée. La distance E inter-torons moyenne séparant deux torons externes TE adjacents est donc supérieure ou égale à 20 µm. De préférence, la distance E inter-torons moyenne séparant deux torons externes TE adjacents est supérieure ou égale à 40 µm et plus préférentiellement à 50 µm. Ici, la distance inter-torons E est égale à 170 µm.

Chaque fil présente une résistance à la rupture, notée Rm, telle que 2500 ≤ Rm ≤ 3100 MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

### PROCEDE DE FABRICATION DU CABLE SELON L'INVENTION

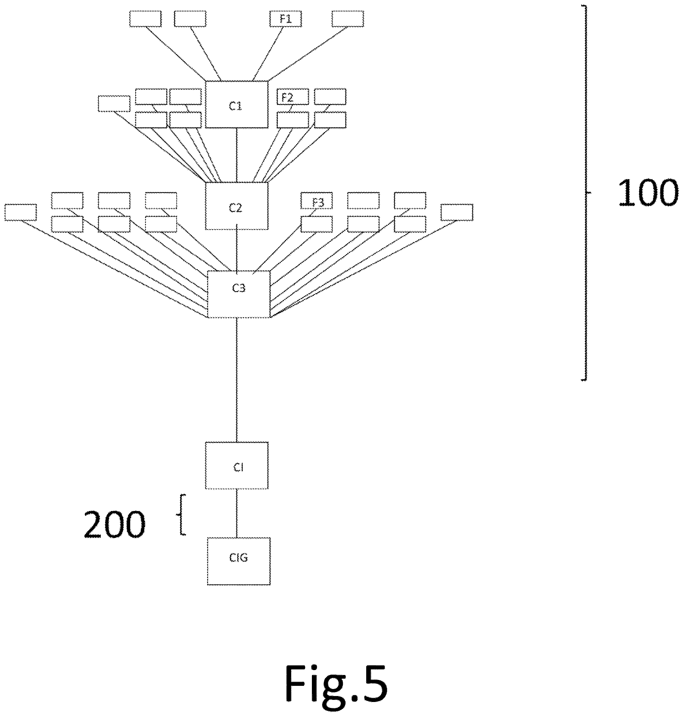

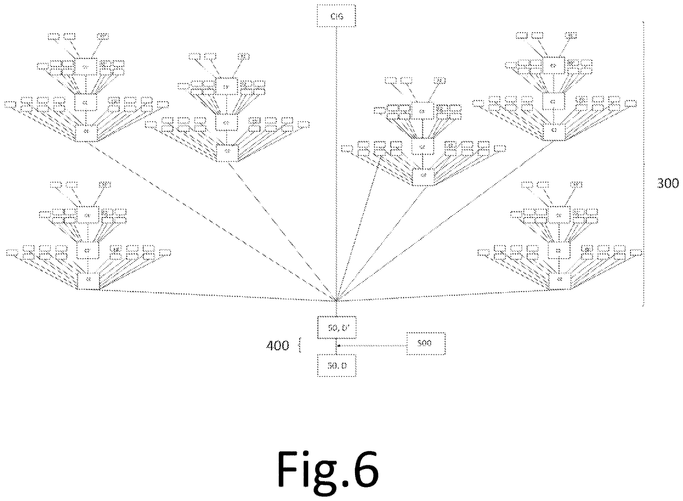

Nous allons maintenant décrire un exemple de procédé de fabrication du câble muti-torons 50 en référence à la figure 5 et à la figure 6.

Chaque toron interne précédemment décrit est fabriqué selon des procédés connus comportant les étapes suivantes, opérées préférentiellement en ligne et en continu :
- tout d'abord, une première étape d'assemblage par câblage des Q=2, 3 ou 4 fils internes F1 de la couche interne C1 au pas p1 et dans le sens Z pour former la couche interne C1 en un premier point d'assemblage ;
- suivie d'une deuxième étape d'assemblage par câblage ou retordage des M fils intermédiaires F2 autour des Q fils internes F1 de la couche interne C1 au pas p2 et dans le sens Z pour former la couche intermédiaire C2 en un deuxième point d'assemblage;
- suivie d'une troisième étape d'assemblage par câblage ou retordage des N fils externes F3 autour des M fils intermédiaires F2 de la couche intermédiaire C2 au pas p3 et dans le sens Z pour former la couche externe C3 en un troisième point d'assemblage;
- préférentiellement une étape d'équilibrage final des torsions.

Dans une étape 100, on assemble en hélice K≥1 torons internes TI par câblage pour former une couche interne CI du câble.

Dans une étape 200, on entoure la couche interne CI d'une composition élastomérique présentant une épaisseur G pour former une couche interne gainée CIG, l'épaisseur G de composition élastomérique étant telle que le rapport R2/Rt va de 1,02 à 1,25 avec Rt étant le rayon d'hélice la couche externe théorique CET obtenue lorsque la couche interne CI est directement au contact de la couche externe théorique CET.

Chaque toron externe précédemment décrit est fabriqué selon des procédés connus comportant les étapes suivantes, opérées préférentiellement en ligne et en continu:
- tout d'abord, une première étape d'assemblage par câblage des Q'= 2, 3 ou 4 fils internes F1' de la couche interne C1' au pas p1' et dans le sens Z pour former la couche interne C1' en un premier point d'assemblage ;
- suivie d'une deuxième étape d'assemblage par câblage ou retordage des M' fils intermédiaires F2' autour des Q' fils internes F1' de la couche interne C1' au pas p2' et dans le sens Z pour former la couche intermédiaire C2' en un deuxième point d'assemblage;
- suivie d'une troisième étape d'assemblage par câblage ou retordage des N' fils externes F3' autour des M' fils intermédiaires F2' de la couche intermédiaire C2' au pas p3' et dans le sens Z pour former la couche externe C3' en un troisième point d'assemblage;
- préférentiellement une étape d'équilibrage final des torsions.

Par « équilibrage de torsion », on entend ici de manière bien connue de l'homme du métier l'annulation des couples de torsion résiduels (ou du retour élastique de torsion) s'exerçant sur chaque fil du toron, dans la couche intermédiaire comme dans la couche externe.

Après cette étape ultime d'équilibrage de la torsion, la fabrication du toron est terminée. Chaque toron est enroulé sur une ou plusieurs bobines de réception, pour stockage, avant l'opération ultérieure d'assemblage par câblage des torons élémentaires pour l'obtention du câble multi-torons.

Dans une étape 300, on assemble en hélice L>1 torons externes TE par câblage autour de la couche interne CI du câble. Dans une étape 400, on utilise des moyens 500 pour rapprocher la couche externe CE du câble du cercle dans lequel la couche interne CIG du câble est circonscrite de telle sorte à ce que le rapport R2/Rt va de 1,00 à 1,10.

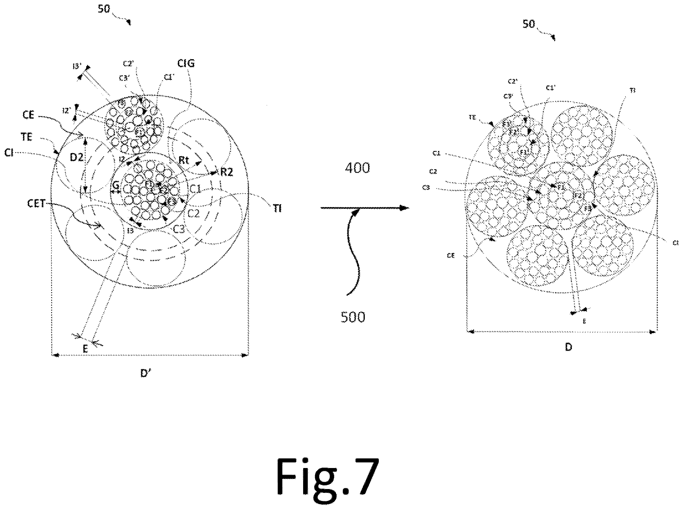

Cette étape 400 est décrite en référence à la figure 7.

Les moyens 500 utilisés pour rapprocher la couche externe CE du câble du cercle dans lequel la couche interne CI du câble est circonscrite sont, par exemple, constitués de deux rangées de galets montées en vis-à-vis mais décalés et entre lesquels on fait passer le câble. Chaque rangée contient entre 6 et 8 galets. Une des rangées est mobile et peut être rapprochée de la rangée fixe pour que le câble subisse une succession de flexion. Ces rangées de galets peuvent être fixes ou mobiles autour de l'axe du câble.

Ainsi, le câble subit une succession de flexions qui permettent de réduire son diamètre comme illustré en figure 7.

L est égal au nombre maximum de torons externes TE Lmax pouvant être disposés sur la couche externe théorique CET présentant un rayon d'hélice Rt et L est tel que la couche externe CE soit incomplètement insaturée. Ici Lmax =6 et L=Lmax=6.

L'épaisseur G de la gaine de composition élastomérique est strictement supérieure à 0 mm et de préférence supérieure ou égale à 0,01 mm. et l'épaisseur G est inférieure ou égale à 0,80 mm, de préférence inférieure ou égale à 0,60 mm et plus préférentiellement inférieure ou égale à 0,52 mm. Ici, G= 0,08mm.

La composition élastomérique comprend un système de vulcanisation, une charge et un élastomère diénique.

On utilise comme composition élastomérique, une composition d'élastomère(s) diénique(s) conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère) ; le module E10 de la composition élastomérique d'enrobage est de 10 MPa environ.

Eventuellement, dans une dernière étape d'assemblage, on enroule la frette F au pas pf dans le sens S autour de l'assemblage précédemment obtenu.

Le câble est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur allant de 1 et 4 mm. Le pas de calandrage (pas de pose des câbles dans le tissu de composition élastomérique) va de 4 mm à 8 mm.

Ces tissus composites sont ensuite utilisés en tant que nappe de travail dans l'armature de sommet lors du procédé de fabrication du pneumatique, dont les étapes sont par ailleurs connues de l'homme du métier.

On a résumé dans le tableau 1 ci-dessous les caractéristiques pour les différents câbles 50, 51, 60 et 70.

**[Tableau 1]**

| Câbles | | 50 | 51 | 60 | 70 |
|---|---|---|---|---|---|
| TI | Q/M/N | 4/9/14 | 4/9/14 | 4/9/14 | 4/9/14 |
| | d1/d2/d3 | 0,26/0,26/0,26 | 0,26/0,26/0,26 | 0,26/0,26/0,26 | 0,26/0,26/0,26 |
| | sens C1/pas p1 (mm) | Z/6 | S/6,5 | Z/6 | Z/6 |
| | sens C2/pas p2 (mm) | Z/12 | S/12 | Z/12 | Z/12 |
| | sens C3/pas p3 (mm) | Z/18 | S/18 | Z/18 | Z/18 |
| | I2(µm)/SI2(mm) | 43 / 0,39 | 39 / 0,35 | 43 / 0,39 | 43 / 0,39 |
| | I3(µm)/SI3(mm) | 53 / 0,74 | 47 / 0,65 | 53 / 0,74 | 53 / 0,74 |
| Gaine | G (mm) | 0,08 | 0,15 | 0,11 | 0,17 |
| TE | Q'/M'/N' | 3/9/14 | 4/9/14 | 3/9/14 | 3/9/14 |
| | d1'/d2'/d3' | 0,26/0,23/0,23 | 0,26/0,26/0,26 | 0,26/0,23/0,23 | 0,26/0,23/0,23 |
| | sens C1'/pas p1' (mm) | S/6 | S/6,5 | S/6 | S/6 |
| | sens C2'/pas p2' (mm) | S/12 | S/12 | S/12 | S/12 |
| | sens C3'/pas p3' (mm) | S/18 | S/18 | S/18 | S/18 |
| | I2'(µm)/SI2'(mm) | 43 / 0,39 | 39 / 0,35 | 43 / 0,39 | 43 / 0,39 |
| | I3'(µm)/SI3'(mm) | 50 / 0,70 | 47 / 0,65 | 50 / 0,70 | 50 / 0,70 |
| Sens câble/pi/pe | | Z/INF/70 | S/INF/70 | Z/INF/70 | Z/INF/70 |
| K | | 1 | 1 | 1 | 1 |
| L | | 6 | 6 | 6 | 6 |
| Lmax | | 6 | 6 | 6 | 6 |
| D (mm) | | 4,84 | 5,43 | 4,90 | 5,02 |
| E (µm) | | 170 | 151 | 203 | 263 |
| R2 avant étape 400 | | 1,69 | 1,87 | 1,77 | 1,81 |
| R2 après étape 400 | | 1,67 | 1,87 | 1,70 | 1,76 |
| Rt | | 1,59 | 1,71 | 1,59 | 1,59 |
| R2/Rt avant étape 400 | | 1,06 | 1,09 | 1,11 | 1,14 |
| R2/Rt après étape 400 | | 1,05 | 1,09 | 1,07 | 1,10 |

### TESTS COMPARATIFS

### TEST DE PERMEABILITE A L'AIR

Ce test permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Un tel test est réalisé sur des câbles issus de fabrication et non vieillis. Les câbles bruts sont préalablement enrobés de l'extérieur par une composition élastomérique dite d'enrobage. Pour cela, une série de 10 câbles disposés parallèlement (distance inter-câble : 20 mm) est placée entre deux couches ou "skims" (deux rectangles de 80 x 200 mm) d'une composition élastomérique diénique à l'état cru, chaque skim ayant une épaisseur de 5 mm ; le tout est alors bloqué dans un moule, chacun des câbles étant maintenu sous une tension suffisante (par exemple 3 daN) pour garantir sa rectitude lors de la mise en place dans le moule, à l'aide de modules de serrage ; puis on procède à la vulcanisation (cuisson) pendant environ 8 heures à une température d'environ 110°C et sous une pression de 15 bar (piston rectangulaire de 80 x 200 mm). Après quoi, on démoule l'ensemble et on découpe 10 éprouvettes de câbles ainsi enrobés, sous forme de parallélépipèdes de dimensions 7x7x60 mm, pour caractérisation.

On utilise comme composition élastomérique d'enrobage une composition d'élastomère(s) diénique(s) conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère) ; le module E10 de la composition élastomérique d'enrobage est de 10 MPa environ.

Le test est réalisé sur 6 cm de longueur de câble, enrobé donc par sa composition élastomérique (ou composition élastomérique d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de composition élastomérique pleine, c'est-à-dire sans câble.

Le débit d'air moyen mesuré (moyenne sur les 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

On a résumé dans le tableau 2, les caractéristiques des câbles comparatifs C1 et C2 et du câble de l'état de la technique EDT (189.23).

**[Tableau 2]**

| Câbles | | C1 | C2 | EDT |
|---|---|---|---|---|
| TI | Q/M/N | 4/9/14 | 4/9/14 | 3/9/15 |
| | d1/d2/d3 | 0,26/0,26/0,26 | 0,26/0,26/0,26 | 0,23/0,23/0,23 |
| | sens C1/pas p1 (mm) | Z/6 | S/6,5 | Z/6,5 |
| | sens C2/pas p2 (mm) | Z/12 | S/12 | Z/12 |
| | sens C3/pas p3 (mm) | Z/18 | S/18 | Z/16 |
| | I2(µm)/SI2(mm) | 43 / 0,39 | 39 / 0,35 | 18 / 0.16 |
| | I3(µm)/SI3(mm) | 53 / 0,74 | 47 / 0, 65 | 15 / 0.23 |
| Gaine | G (mm) | 0 | 0 | 0 |
| TE | Q' /M' /N' | 3/9/14 | 4/9/14 | 3/9/15 |
| | d1'/d2'/d3' | 0,26/0,23/0,23 | 0,26/0,26/0,26 | 0,23/0,23/0,23 |
| | sens C1'/pas p1' (mm) | S/6 | S/6,5 | Z/6,5 |
| | sens C2'/pas p2' (mm) | S/12 | S/12 | Z/12 |
| | sens C3'/pas p3' (mm) | S/18 | S/18 | Z/16 |
| | I2'(µm)/SI2'(mm) | 43 / 0,38 | 39 / 0,35 | 18 / 0.16 |
| | I3'(µm)/SI3'(mm) | 50 / 0,70 | 47 / 0,65 | 15 / 0.23 |
| Sens câble/pi/pe | | Z/inf/70 | S/inf/70 | S/inf/60 |
| K | | 1 | 1 | 1 |
| L | | 6 | 6 | 6 |
| Lmax | | 6 | 6 | 6 |
| D (mm) | | 4,68 | 5,13 | 4,27 |
| E (µm) | | 94,2 | 0 | 0 |
| R2 avant étape 400 | | 1,593 | 1,713 | 1,43 |
| R2 après étape 400 | | - | - | - |
| Rt | | 1,593 | 1,713 | 1,43 |
| R2/Rt avant étape 400 | | 1 | 1 | 1 |
| R2/Rt après étape 400 | | 1 | 1 | 1 |

On a résumé dans le tableau 3 ci-dessous les résultats au test de perméabilité respectivement pour le câble de l'état de la technique EDT, les câbles comparatifs C1 et C2 et les câbles selon l'invention 50, 60 et 70. Le câble comparatif C1 est une version du câble 189.23 de l'EDT dans laquelle on désature des couches de fils et on différencie les diamètres de fils pour améliorer la pénétrabilité. Le câble C2 est une autre version du câble 189.23 de l'EDT. Les résultats à ces tests sont donnés en base 100. Ainsi, un résultat supérieur à 100 à l'un ou l'autre de ces tests signifie que le câble testé présente une imperméabilité supérieure au câble témoin, ici le câble témoin C1 par rapport aux câbles C2, 50,51, 60 et 70.

**[Tableau 3]**

| Câbles | EDT | C1 | C2 | 50 | 51 | 60 | 70 |
|---|---|---|---|---|---|---|---|
| K/L | 1/6 | 1/6 | 1/6 | 1/6 | 1/6 | 1/6 | 1/6 |
| Q/M/N/Q' /M'/N' | 3/9/15/3/ 9/15 | 4/9/14/3/ 9/14 | 4/9/14/4/ 9/14 | 4/9/14/3/ 9/14 | 4/9/14/4/ 9/14 | 4/9/14/3/ 9/14 | 4/9/14/3/ 9/14 |
| R2 avant étape 400 (mm) | 1,43 | 1,59 | 1,71 | 1,69 | 1,87 | 1,77 | 1,81 |
| R2 après étape 400 (mm) | - | - | - | 1,67 | 1,87 | 1,70 | 1,76 |
| Rt (mm) | 1,43 | 1,59 | 1,71 | 1,59 | 1,71 | 1,59 | 1,59 |
| R2/Rt avant étape 400 | 1 | 1 | 1 | 1,06 | 1,09 | 1,11 | 1,14 |
| R2/Rt après étape 400 | - | - | - | 1,05 | 1,09 | 1,07 | 1,10 |
| G (mm) | 0 | 0 | 0 | 0,08 | 0,15 | 0,11 | 0,17 |
| Perméabili té (base 100 C1) | 18 | 100 | 18 | 180 | 134 | 189 | 192 |

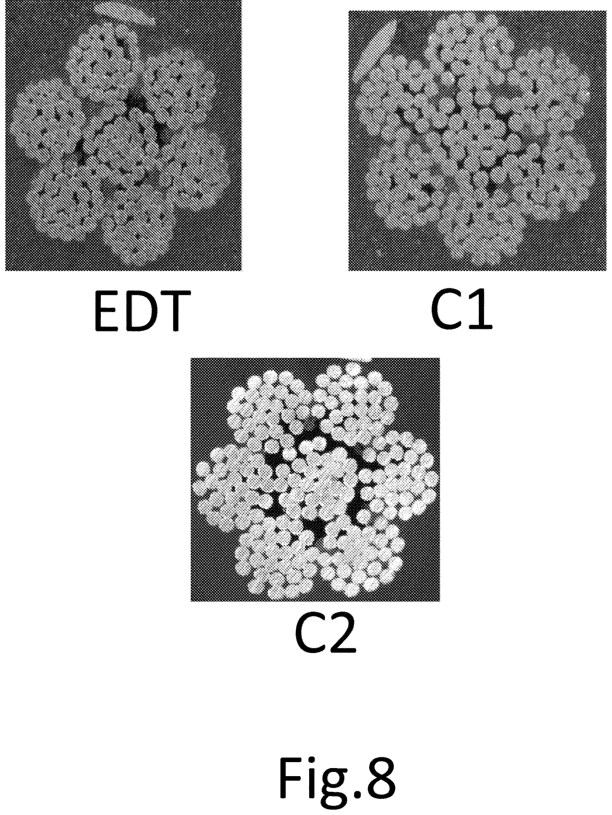

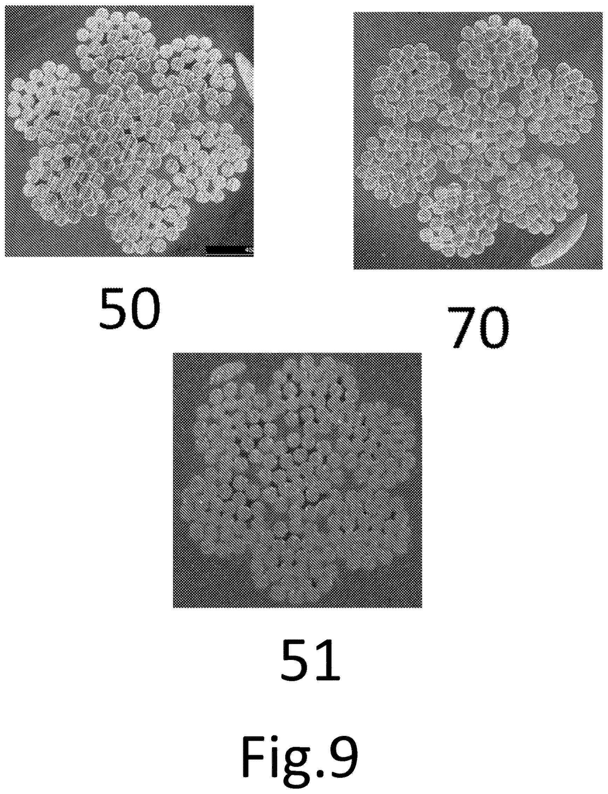

On note que les câbles 50, 51, 60 et 70 selon l'invention présentent une pénétrabilité très nettement supérieure à celle du câble EDT et est nettement supérieure à celle des câbles comparatifs C1 et C2 et ce, uniquement en raison du rapport R2/Rt conforme à l'invention. On constate d'ailleurs sur la figure 9, que le capillaire central est presque totalement pénétré pour les câbles 50, 51 et 70 alors que sur la figure 8 celui du câble EDT et ceux des câbles comparatifs C1 et C2 ne le sont pas, les zones sombres étant les zones où il manque de la composition élastomérique.

Ainsi le tableau 3 montre que, pour des épaisseurs de gaine variées, la pénétration de la composition élastomérique dans le câble, et donc l'accessibilité du toron interne par cette composition élastomérique, est significativement améliorée pour un rapport R2/Rt conforme à l'invention grâce à la présence de la gaine d'épaisseur G par rapport au câble de l'état de la technique pour lesquels R2/Rt=1 et pour les versions représentées par les câbles témoin C1 et C2.

Bien entendu, l'invention n'est pas limitée aux exemples de réalisation précédemment décrits.

Pour des raisons de faisabilité industrielle, de coût et de performance globale, on préfère mettre en oeuvre l'invention avec des fils linéaires, c'est-à-dire droit, et de section transversale conventionnelle circulaire.

On pourra également combiner les caractéristiques des différents modes de réalisation décrits ou envisagés ci-dessus sous réserve que celles-ci soient compatibles entre elles.

## Revendications

1. Câble (50) multi-torons à deux couches, comprenant :
- une couche interne (CI) du câble constituée de K≥1 toron(s) interne(s) (TI), le ou chaque toron interne (TI) étant à trois couches (C1, C2, C3) et comprenant :
- une couche interne (C1) constituée de Q= 2, 3 ou 4 fils métalliques internes (F1),
- une couche intermédiaire ( C2) constituée de M fils métalliques intermédiaires (F2) de diamètre d2 enroulés autour de la couche interne (C1), et
- une couche externe (C3) constituée de N fils métalliques externes (F3) de diamètre d3 enroulés autour de la couche intermédiaire (C2),
- une couche externe (CE) du câble constituée de L>1 torons externes (TE) enroulés autour de la couche interne (CI) du câble présentant un rayon d'hélice R2, chaque toron externe (TE) étant à trois couches (C1', C2', C3') et comprenant :
- une couche interne (C1') constituée de Q'=2, 3 ou 4 fils métalliques internes (F1'),
- une couche intermédiaire ( C2') constituée de M' fils métalliques intermédiaires (F2') de diamètre d2' enroulés autour de la couche interne (C1'), et
- une couche externe (C3') constituée de N' fils métalliques externes (F3') de diamètre d3' enroulés autour de la couche intermédiaire (C2'),
dans lequel :
- la couche intermédiaire (C2) du ou de chaque toron interne (TI) est désaturée de sorte que la somme Sl2 des distances interfils l2 de la couche intermédiaire du ou de chaque toron interne (TI) est supérieure ou égale au diamètre d2 ;
- la couche externe (C3) du ou de chaque toron interne (TI) est désaturée de sorte que la somme Sl3 des distances interfils l3 de la couche externe du ou de chaque toron interne (TI) est supérieure ou égale au diamètre d3 ;
- la couche intermédiaire (C2') du ou de chaque toron externe (TE) est désaturée de sorte que la somme Sl2' des distances interfils l2' de la couche intermédiaire (C2') de chaque toron externe (TE) est supérieure ou égale au diamètre d2' ;
- la couche externe (C3') de chaque toron externe (TE) est désaturée de sorte que la somme Sl3' des distances interfils l3' de la couche externe (C3') de chaque toron externe (TE) est supérieure ou égale au diamètre d3' ; **caractérisé en ce que** :
- le câble (50) est obtenu par un procédé comprenant :
- une étape de fabrication de la couche interne gainée (CIG) dans laquelle on entoure la couche interne (CI) d'une composition élastomérique présentant une épaisseur G puis d'une couche externe (CE), l'épaisseur G de composition élastomérique étant telle que le rapport R2/Rt va de 1,02 à 1,25 avec Rt étant le rayon d'hélice la couche externe théorique (CET) obtenue lorsque la couche interne (CI) est directement au contact de la couche externe théorique (CET) ; et
- une étape (400) pour rapprocher la couche externe (CE) du câble du cercle dans lequel la couche interne (CI) du câble est circonscrite de telle sorte à ce que le rapport R2/Rt va de 1,00 à 1,10.

2. Câble (50) selon la revendication 1, dans lequel la couche externe (CE) du câble est saturée de sorte que la distance inter-torons E des torons externes définie, sur une section du câble perpendiculaire à l'axe principal du câble (50), comme la distance la plus courte qui sépare, en moyenne, les enveloppes circulaires dans lesquelles sont inscrits deux torons externes (TE) adjacents soit inférieure strictement à 20 µm.

3. Câble (50) selon la revendication 1, dans lequel L est égal au nombre maximum de torons externes (TE) Lmax pouvant être disposés sur la couche externe théorique (CET) présentant un rayon d'hélice Rt et L est tel que la couche externe (CE) soit incomplètement insaturée de telle sorte qu'il n'existe pas suffisamment de place dans la couche externe pour y ajouter au moins un (L+1)ième toron externe du même diamètre que les L torons externes de la couche externe.

4. Câble (50) selon l'une quelconque des revendications précédentes, dans lequel l'épaisseur G de la gaine de composition élastomérique est strictement supérieure à 0 mm et de préférence supérieure ou égale à 0,01 mm.

5. Câble (50) selon l'une quelconque des revendications précédentes, dans lequel l'épaisseur G de la gaine de composition élastomérique est inférieure ou égale à 0,80 mm, de préférence inférieure ou égale à 0,60 mm et plus préférentiellement inférieure ou égale à 0,52 mm.

6. Câble (50) selon l'une quelconque des revendications précédentes, dans lequel la composition élastomérique comprend un élastomère choisi dans le groupe constitué par les polybutadiènes, le caoutchouc naturel, les polyisoprènes de synthèse, les copolymères de butadiène, les copolymères d'isoprène, et les mélanges de ces élastomères.

7. Câble (50) selon l'une quelconque des revendications précédentes, dans lequel K=1, 2, 3 ou 4, de préférence K=1, 2 ou 3 et plus préférentiellement K=1 ou 3.

8. Câble (50) selon l'une quelconque des revendications précédentes, dans lequel L=6, 7, 8, 9 ou 10 de préférence L=6, 7, 8 ou 9 et plus préférentiellement L=6 ou 9.

9. Câble (50) selon l'une quelconque des revendications précédentes, dans lequel M=7, 8, 9 ou 10 et de préférence M=7, 8 ou 9.

10. Câble (50) selon l'une quelconque des revendications précédentes, dans lequel M'=7, 8, 9 ou 10 et de préférence M'=7, 8 ou 9.

11. Câble (50) selon l'une quelconque des revendications précédentes, dans lequel N=12, 13, 14, 15 ou 16 et de préférence N= 12, 13, ou 14.

12. Câble (50) selon l'une quelconque des revendications précédentes, dans lequel N'=12, 13, 14,15 ou 16 et de préférence N'= 12, 13 ou 14.

13. Procédé de fabrication d'un câble (50) multi-torons à deux couches, dans lequel:
- dans une étape (100), on assemble en hélice K≥1 torons internes (TI) par câblage ou retordage pour former une couche interne (CI) du câble ; le ou chaque toron interne (TI) étant à trois couches (C1, C2, C3) et comprenant : une couche interne (C1) constituée de Q= 2, 3 ou 4 fils métalliques internes (F1), une couche intermédiaire (C2) constituée de M fils métalliques intermédiaires (F2) de diamètre d2 enroulés autour de la couche interne (C1) de sorte que la somme Sl2 des distances interfils l2 de la couche intermédiaire du ou de chaque toron interne (TI) est supérieure ou égale au diamètre d2 et une couche externe (C3) constituée de N fils métalliques externes (F3) de diamètre d3 enroulés autour de la couche intermédiaire (C2) de sorte que la somme Sl3 des distances interfils l3 de la couche externe du ou de chaque toron interne (TI) est supérieure ou égale au diamètre d3 ;
- dans une étape (200), on entoure la couche interne (CI) d'une composition élastomérique présentant une épaisseur G pour former une couche interne gainée (CIG) , l'épaisseur G de composition élastomérique étant telle que le rapport R2/Rt va de 1,02 à 1,25 avec Rt étant le rayon d'hélice la couche externe théorique (CET) obtenue lorsque la couche interne (CI) est directement au contact de la couche externe théorique (CET) ;
- dans une étape (300), on assemble en hélice L>1 torons externes (TE) autour de la couche interne (CI) du câble par câblage ou retordage, chaque toron externe (TE) étant à trois couches (C1', C2', C3') et comprenant : une couche interne (C1') constituée de Q'=2, 3 ou 4 fils métalliques internes (F1'), une couche intermédiaire (C2') constituée de M' fils métalliques intermédiaires (F2') de diamètre d2' enroulés autour de la couche interne (C1') de sorte que la somme Sl2' des distances interfils l2' de la couche intermédiaire (C2') de chaque toron externe (TE) est supérieure ou égale au diamètre d2' et une couche externe (C3') constituée de N' fils métalliques externes (F3') de diamètre d3' enroulés autour de la couche intermédiaire (C2') de sorte que la somme Sl3' des distances interfils l3' de la couche externe (C3') de chaque toron externe (TE) est supérieure ou égale au diamètre d3'; **caractérisé en ce que** :
- dans une étape (400), on utilise des moyens (500) pour rapprocher la couche externe (CE) du câble du cercle dans lequel la couche interne (CI) du câble est circonscrite de telle sorte à ce que le rapport R2/Rt va de 1,00 à 1,10.

14. Produit renforcé (100), **caractérisé en ce qu'**il comprend une matrice élastomérique (102) et au moins un câble (50) selon l'une quelconque des revendications 1 à 12.

15. Pneumatique (10), **caractérisé en ce qu'**il comprend au moins un câble (50) selon l'une quelconque des revendications 1 à 12 ou un produit renforcé selon la revendication 14.

## Patentansprüche

1. Mehrlitziges Seil (50) mit zwei Lagen, umfassend:
- eine innere Lage (CI) des Seils, die aus K ≥ 1 inneren Litze(n) (TI) besteht, wobei die oder jede innere Litze (TI) drei Lagen (C1, C2, C3) aufweist und Folgendes umfasst:
- eine innere Lage (C1), die aus Q = 2, 3 oder 4 inneren Metalldrähten (F1) besteht,
- eine mittlere Lage (C2), die aus M mittleren Metalldrähten (F2) mit einem Durchmesser d2 besteht, die um die innere Lage (C1) gewickelt sind, und
- eine äußere Lage (C3), die aus N äußeren Metalldrähten (F3) mit einem Durchmesser d3 besteht, die um die mittlere Lage (C2) gewickelt sind,
- eine äußere Lage (CE) des Seils, die aus L > 1 äußeren Litzen (TE) besteht, die um die innere Lage (CI) des Seils gewickelt sind, und einen Helixradius R2 aufweist, wobei jede äußere Litze (TE) drei Lagen (C1', C2', C3') aufweist und Folgendes umfasst:
- eine innere Lage (C1'), die aus Q' = 2, 3 oder 4 inneren Metalldrähten (F1') besteht,
- eine mittlere Lage (C2'), die aus M' mittleren Metalldrähten (F2') mit einem Durchmesser d2' besteht, die um die innere Lage (C1') gewickelt sind, und
- eine äußere Lage (C3'), die aus N' äußeren Metalldrähten (F3') mit einem Durchmesser d3' besteht, die um die mittlere Lage (C2') gewickelt sind,
wobei:
- die mittlere Lage (C2) der oder jeder inneren Litze (TI) so entsättigt ist, dass die Summe SI2 der Abstände 12 zwischen den Drähten der mittleren Lage der oder jeder inneren Litze (TI) größer als oder gleich dem Durchmesser d2 ist;
- die äußere Lage (C3) der oder jeder inneren Litze (TI) so entsättigt ist, dass die Summe SI3 der Abstände 13 zwischen den Drähten der äußeren Lage der oder jeder inneren Litze (TI) größer als oder gleich dem Durchmesser d3 ist;
- die mittlere Lage (C2') der oder jeder äußeren Litze (TE) so entsättigt ist, dass die Summe SI2' der Abstände l2' zwischen den Drähten der mittleren Lage (C2') jeder äußeren Litze (TE) größer als oder gleich dem Durchmesser d2' ist;
- die äußere Lage (C3') jeder äußeren Litze (TE) so entsättigt ist, dass die Summe SI3' der Abstände l3' zwischen den Drähten der äußeren Lage (C3') jeder äußeren Litze (TE) größer als oder gleich dem Durchmesser d3' ist; **dadurch gekennzeichnet, dass**:
- das Seil (50) durch ein Verfahren erhalten wird, das Folgendes umfasst:
- einen Schritt der Fertigung der ummantelten inneren Lage (CIG), bei dem die innere Lage (CI) mit einer Elastomerzusammensetzung, die eine Dicke G aufweist, dann mit einer äußeren Lage (CE) umgeben wird, wobei die Dicke G aus Elastomerzusammensetzung derart ist, dass das Verhältnis R2/Rt von 1,02 bis 1,25 reicht, wobei Rt der Helixradius der theoretischen äußeren Lage (CET) ist, der erhalten wird, wenn die innere Lage (CI) in direktem Kontakt mit der theoretischen äußeren Lage (CET) ist; und
- einen Schritt (400) zum Annähern der äußeren Lage (CE) des Seils an den Kreis, in den die innere Lage (CI) des Seils eingeschrieben ist, sodass das Verhältnis R2/Rt von 1,00 bis 1,10 reicht.

2. Seil (50) nach Anspruch 1, wobei die äußere Lage (CE) des Seils so gesättigt ist, dass der Zwischenlitzenabstand E der äußeren Litzen, der, über einen zur Hauptachse des Seils (50) senkrechten Abschnitt des Seils, als der kürzeste Abstand definiert ist, der im Durchschnitt die kreisförmigen Hüllen trennt, in die zwei benachbarte äußere Litzen (TE) einbeschrieben sind, strikt kleiner als 20 um ist.

3. Seil (50) nach Anspruch 1, wobei L gleich der maximalen Anzahl von äußeren Litzen (TE) Lmax ist, die auf der theoretischen äußeren Lage (CET), die einen Helixradius Rt aufweist, angeordnet werden können, und L derart ist, dass die äußere Lage (CE) unvollständig ungesättigt ist, sodass es in der äußeren Lage nicht genügend Platz gibt, um mindestens eine (L+1)-te äußere Litze mit dem gleichen Durchmesser wie die L äußeren Litzen der äußeren Lage hinzuzufügen.

4. Seil (50) nach einem der vorhergehenden Ansprüche, wobei die Dicke G des Mantels aus Elastomerzusammensetzung strikt größer als 0 mm und vorzugsweise größer als oder gleich 0,01 mm ist.

5. Seil (50) nach einem der vorhergehenden Ansprüche, wobei die Dicke G des Mantels aus Elastomerzusammensetzung kleiner als oder gleich 0,80 mm, vorzugsweise kleiner als oder gleich 0,60 mm und noch bevorzugter kleiner als oder gleich 0,52 mm ist.

6. Seil (50) nach einem der vorhergehenden Ansprüche, wobei die Elastomerzusammensetzung ein Elastomer umfasst, das aus der Gruppe gewählt ist, die aus den Polybutadienen, dem Naturkautschuk, den synthetischen Polyisoprenen, den Butadien-Copolymeren, den Isopren-Copolymeren und den Mischungen dieser Elastomere besteht.

7. Seil (50) nach einem der vorhergehenden Ansprüche, wobei K = 1, 2, 3 oder 4, vorzugsweise K = 1, 2 oder 3 und noch bevorzugter K = 1 oder 3.

8. Seil (50) nach einem der vorhergehenden Ansprüche, wobei L = 6, 7, 8, 9 oder 10, vorzugsweise L = 6, 7, 8 oder 9 und noch bevorzugter L = 6 oder 9.

9. Seil (50) nach einem der vorhergehenden Ansprüche, wobei M = 7, 8, 9 oder 10 und vorzugsweise M = 7, 8 oder 9.

10. Seil (50) nach einem der vorhergehenden Ansprüche, wobei M' = 7, 8, 9 oder 10 und vorzugsweise M' = 7, 8 oder 9.

11. Seil (50) nach einem der vorhergehenden Ansprüche, wobei N = 12, 13, 14, 15 oder 16 und vorzugsweise N = 12, 13 oder 14.

12. Seil (50) nach einem der vorhergehenden Ansprüche, wobei N' = 12, 13, 14, 15 oder 16 und vorzugsweise N' = 12, 13 oder 14.

13. Verfahren zur Fertigung eines mehrlitzigen Seils (50) mit zwei Lagen, wobei:
- in einem Schritt (100) K ≥ 1 innere Litze(n) (TI) durch Verseilen oder Verzwirnen spiralförmig angeordnet werden, um eine innere Lage (CI) des Seils zu bilden; wobei die oder jede innere Litze (TI) drei Lagen (C1, C2, C3) aufweist und Folgendes umfasst: eine innere Lage (C1), die aus Q = 2, 3 oder 4 inneren Metalldrähten (F1) besteht, eine mittlere Lage (C2), die aus M mittleren Metalldrähten (F2) mit einem Durchmesser d2 besteht, die um die innere Lage (C1) gewickelt sind, sodass die Summe SI2 der Abstände 12 zwischen den Drähten der mittleren Lage der oder jeder inneren Litze (TI) größer als oder gleich dem Durchmesser d2 ist, und eine äußere Lage (C3), die aus N äußeren Metalldrähten (F3) mit einem Durchmesser d3 besteht, die um die mittlere Lage (C2) gewickelt sind, sodass die Summe SI3 der Abstände 13 zwischen den Drähten der äußeren Lage der oder jeder inneren Litze (TI) größer als oder gleich dem Durchmesser d3 ist;
- in einem Schritt (200) die innere Lage (CI) mit einer Elastomerzusammensetzung, die eine Dicke G aufweist, umgeben wird, um eine ummantelte innere Lage (CIG) zu bilden, wobei die Dicke G aus Elastomerzusammensetzung derart ist, dass das Verhältnis R2/Rt von 1,02 bis 1,25 reicht, wobei Rt der Helixradius der theoretischen äußeren Lage (CET) ist, der erhalten wird, wenn die innere Lage (CI) in direktem Kontakt mit der theoretischen äußeren Lage (CET) ist;
- in einem Schritt (300) L > 1 äußere Litzen (TE) durch Verseilen oder Verzwirnen um die innere Lage (CI) des Seils spiralförmig angeordnet werden, wobei jede äußere Litze (TE) drei Lagen (C1', C2', C3') aufweist und Folgendes umfasst: eine innere Lage (C1'), die aus Q' = 2, 3 oder 4 inneren Metalldrähten (F1') besteht, eine mittlere Lage (C2'), die aus M' mittleren Metalldrähten (F2') mit einem Durchmesser d2' besteht, die um die innere Lage (C1') gewickelt sind, sodass die Summe SI2' der Abstände l2' zwischen den Drähten der mittleren Lage (C2') jeder äußeren Litze (TE) größer als oder gleich dem Durchmesser d2' ist, und eine äußere Lage (C3'), die aus N' äußeren Metalldrähten (F3') mit einem Durchmesser d3' besteht, die um die mittlere Lage (C2') gewickelt sind, sodass die Summe SI3' der Abstände l3' zwischen den Drähten der äußeren Lage (C3') jeder äußeren Litze (TE) größer als oder gleich dem Durchmesser d3' ist; **dadurch gekennzeichnet, dass**:
- in einem Schritt (400) Mittel (500) zum Annähern der äußeren Lage (CE) des Seils an den Kreis, in den die innere Lage (CI) des Seils eingeschrieben ist, eingesetzt werden, sodass das Verhältnis R2/Rt von 1,00 bis 1,10 reicht.

14. Verstärktes Produkt (100), **dadurch gekennzeichnet, dass** es eine Elastomermatrix (102) und mindestens ein Seil (50) nach einem der Ansprüche 1 bis 12 umfasst.

15. Reifen (10), **dadurch gekennzeichnet, dass** er mindestens ein Seil (50) nach einem der Ansprüche 1 bis 12 oder ein verstärktes Produkt nach Anspruch 14 umfasst.

## Claims

1. Two-layer multi-strand cord (50), comprising:
- an internal layer (CI) of the cord made up of K≥1 internal strand(s) (Tl), the or each internal strand (Tl) being a three-layer (C1, C2, C3) strand and comprising:
- an internal layer (C1) made up of Q= 2, 3 or 4 internal metal threads (F1),
- an intermediate layer (C2) made up of M intermediate metal threads (F2) of diameter d2 wound around the internal layer (C1), and
- an external layer (C3) made up of N external metal threads (F3) of diameter d3 wound around the intermediate layer (C2),
- an external layer (CE) of the cord made up of L>1 external strands (TE) wound around the internal layer (CI) of the cord, having a helix radius R2, each external strand (TE) being a three-layer (C1', C2', C3') strand and comprising:
- an internal layer (C1') made up of Q'=2, 3 or 4 internal metal threads (F1'),
- an intermediate layer (C2') made up of M' intermediate metal threads (F2') of diameter d2' wound around the internal layer (C1'), and
- an external layer (C3') made up of N' external metal threads (F3') of diameter d3' wound around the intermediate layer (C2'),
wherein:
- the intermediate layer (C2) of the or of each internal strand (Tl) is desaturated so that the sum SI2 of the inter-thread distances l2 of the intermediate layer of the or of each internal strand (Tl) is greater than or equal to the diameter d2;
- the external layer (C3) of the or of each internal strand (Tl) is desaturated so that the sum SI3 of the inter-thread distances l3 of the external layer of the or of each internal strand (Tl) is greater than or equal to the diameter d3;
- the intermediate layer (C2') of the or of each external strand (TE) is desaturated so that the sum SI2' of the inter-thread distances l2' of the intermediate layer (C2') of each external strand (TE) is greater than or equal to the diameter d2';
- the external layer (C3') of each external strand (TE) is desaturated so that the sum SI3' of the inter-thread distances l3' of the external layer (C3') of each external strand (TE) is greater than or equal to the diameter d3'; **characterized in that**
- the cord (50) is obtained by a method comprising:
- a step of manufacturing the sheathed internal layer (CIG) in which step the internal layer (CI) is surrounded with an elastomer composition having a thickness G and then by an external layer (CE), the thickness G of the elastomer composition being such that the ratio R2/Rt ranges from 1.02 to 1.25, where Rt is the helix radius of the theoretical external layer (CET) obtained when the internal layer (CI) is directly in contact with the theoretical external layer (CET); and
- a step (400) for bringing the external layer (CE) of the cord closer to the circle in which the internal layer (CI) of the cord is circumscribed so that the ratio R2/Rt ranges from 1.00 to 1.10.

2. Cord (50) according to Claim 1, wherein the external layer (CE) of the cord is saturated so that the inter-strand distance E of the external strands, defined, on a cross section of the cord perpendicular to the main axis of the cord (50), as being the shortest distance separating, on average, the circular envelopes in which two adjacent external strands (TE) are inscribed, is strictly less than 20 µm.

3. Cord (50) according to Claim 1, wherein L is equal to the maximum number of external strands (TE) Lmax that can be laid on the theoretical external layer (CET) having a helix radius Rt and L is such that the external layer (CE) is incompletely unsaturated, such that there is enough space in the external layer to add in at least one (L+1)^{th} strand having the same diameter as the L external strands of the external layer.

4. Cord (50) according to any one of the preceding claims, in which the thickness G of the sheath of elastomer composition is strictly greater than 0 mm, and preferably greater than or equal to 0.01 mm.

5. Cord (50) according to any one of the preceding claims, wherein the thickness G of the sheath of elastomer composition is less than or equal to 0.80 mm, preferably less than or equal to 0.60 mm, and more preferably less than or equal to 0.52 mm.

6. Cord (50) according to any one of the preceding claims, wherein the elastomer composition comprises an elastomer selected from the group consisting of polybutadienes, natural rubber, synthetic polyisoprenes, butadiene copolymers, isoprene copolymers, and mixtures of these elastomers.

7. Cord (50) according to any one of the preceding claims, wherein K=1, 2, 3 or 4, and preferably K=1, 2 or 3 and more preferably K=1 or 3.

8. Cord (50) according to any one of the preceding claims, wherein L=6, 7, 8, 9 or 10 and preferably L=6, 7, 8 or 9 and more preferably L=6 or 9.

9. Cord (50) according to any one of the preceding claims, wherein M=7, 8, 9 or 10 and for preference M=7, 8 or 9.

10. Cord (50) according to any one of the preceding claims, wherein M'=7, 8, 9 or 10 and for preference M'=7, 8 or 9.

11. Cord (50) according to any one of the preceding claims, wherein N=12, 13, 14, 15 or 16 and for preference N=12, 13 or 14.

12. Cord (50) according to any one of the preceding claims, wherein N'=12, 13, 14, 15 or 16 and for preference N'=12, 13 or 14.

13. Method of manufacturing a two-layer multi-strand cord (50), **characterized in that:**
- in a step (100), K≥1 internal strand(s) (Tl) are assembled by cabling or twisting into a helix to form an internal layer (CI) of the cord; the or each internal strand (Tl) being a three-layer (C1, C2, C3) strand and comprising: an internal layer (C1) made up of Q= 2, 3 or 4 internal metal threads (F1), an intermediate layer (C2) made up of M intermediate metal threads (F2) of diameter d2 wound around the internal layer (C1), so that the sum SI2 of the inter-thread distances l2 of the intermediate layer of the or of each internal strand (Tl) is greater than or equal to the diameter d2 and an external layer (C3) made up of N external metal threads (F3) of diameter d3 wound around the intermediate layer (C2), so that the sum SI3 of the inter-thread distances l3 of the external layer of the or of each internal strand (Tl) is greater than or equal to the diameter d3;
- in a step (200), the internal layer (CI) is surrounded with an elastomer composition having a thickness G, to form a sheathed internal layer (CIG), the thickness G of the elastomer composition being such that the ratio R2/Rt ranges from 1.02 to 1.25, where Rt is the helix radius of the theoretical external layer (CET) obtained when the internal layer (CI) is directly in contact with the theoretical external layer (CET);
- in a step (300), L>1 external strands (TE) are assembled by cabling or twisting into a helix around the internal layer (CI) of the cord, each external strand (TE) being a three-layer (C1', C2', C3') strand and comprising: an internal layer (C1') made up of Q'=2, 3 or 4 internal metal threads (F1'), an intermediate layer (C2') made up of M' intermediate metal threads (F2') of diameter d2' wound around the internal layer (C1'), so that the sum SI2' of the inter-thread distances l2' of the intermediate layer (C2') of each external strand (TE) is greater than or equal to the diameter d2' and an external layer (C3') made up of N' external metal threads (F3') of diameter d3' wound around the intermediate layer (C2'), so that the sum SI3' of the inter-thread distances l3' of the external layer (C3') of each external strand (TE) is greater than or equal to the diameter d3';
- in a step (400), means (500) are used for bringing the external layer (CE) of the cord closer to the circle in which the internal layer (CI) of the cord is circumscribed so that the ratio R2/Rt ranges from 1.00 to 1.10.

14. Reinforced product (100), **characterized in that** it comprises an elastomer matrix (102) and at least one cord (50) according to any one of Claims 1 to 12.

15. Tyre (10), **characterized in that** it comprises at least one cord (50) according to any one of Claims 1 to 12 or a reinforced product according to Claim 14.
